# EUROPÄISCHE PATENTSCHRIFT

(11) **EP 0 379 608 B1**
(45) Veröffentlichungstag und Bekanntmachung des Hinweises auf die Patenterteilung: **31.03.1993**
(21) Anmeldenummer: 89101151.2
(22) Anmeldetag: 23.01.1989
(51) Int. Cl.: H02P 7/622, H02M 1/084

(54) **Verfahren und Vorrichtung zur Steuerung von ein- oder mehrphasigen Wechselstromstellern**
Method and device for controlling single or multiphase AC voltage converters
Méthode et appareil pour la commande d'organes de réglage de courant alternatif monophasés ou polyphasés

(43) Veröffentlichungstag der Anmeldung: 01.08.1990
(73) Patentinhaber: SIEMENS AKTIENGESELLSCHAFT, 80333 München (DE)
(72) Erfinder: Doerwald, B. Claus, D-8552 Höchstadt (DE); Runggaldier, Diethard, D-8602 Stegaurach (DE)

(56) Entgegenhaltungen:
- DE-A- 3 208 652
- GB-A- 2 084 359
- US-A- 4 426 614
- US-A- 4 459 529
- US-A- 4 710 692

## Beschreibung

Die Erfindung bezieht sich auf ein Verfahren und eine Vorrichtung zur Steuerung von ein- oder mehrphasigen Wechselstromstellern durch Phasenanschnittsteuerung von Halbleiter-Ventilen.

Zur Regelung der in einem Wechselstromnetz einer elektrischen Last zugeführten Leistung werden Wechselstromsteller verwendet, die durch Phasenanschnittsteuerung von Halbleiter-Ventilen gesteuert werden. Insbesondere beim Betrieb eines Wechselstrommotors erfordern wechselnde Betriebsbedingungen des Motors, wie z.B. unterschiedliche Belastungen während Start- oder Verzögerungsphasen beim Ein-und Ausschalten eine Regelung der dem Motor zugeführten Leistung, um das Netz, den Motor und den Antrieb vor unnötigen Belastungen zu schützen.

Aus der britischen Patentschrift 2 084 359 ist eine Vorrichtung zur Steuerung eines Wechselstromstellers für einen Wechselstrommotor bekannt, bei der ein beispielsweise durch Unterbelastung des Motors hervorgerufener ungünstiger Leistungsfaktor verbessert werden soll. Dazu sind dem Motor für jede Versorgungsphase steuerbare Halbleiter-Ventile, insbesondere ein Triac oder eine antiparallele Thyristorschaltung, zugeordnet, die über Phasenanschnittsteuerung eine von den aktuellen Betriebsbedingungen des Motors abhängige Leistungszufuhr ermöglichen. Eine Verbesserung des Leistungsfaktors wird bei dieser bekannten Vorrichtung dadurch erreicht, daß in einer Steuereinrichtung der Phasenunterschied zwischen Strom und Spannung für jede Phase detektiert und durch eine entsprechende Vergroßerung des Zündwinkels, d.h. des Zeitraums, der zwischen dem Stromnulldurchgang und dem Zündzeitpunkt für die jeweilige Phase verstreicht, verringert wird. Als Zeitreferenz für die Ermittlung des Zündzeitpunkts wird bei der bekannten Vorrichtung der Zeitpunkt des Stromnulldurchganges verwendet, der durch Messung der über dem Triac anliegenden Spannung ermittelt wird. Diese Spannung wird einem Komparator zugeleitet, dessen Ausgangszustände den Schaltzuständen dieses Triacs entsprechen. Der Stromnulldurchgang korrespondiert dann zu einer Flanke des Ausgangssignals des Komparators, aus der mit Hilfe eines Monoflops ein Abtastimpuls für eine mit dem Nulldurchgang der Versorgungsspannung synchronisierte Rampenspannung erzeugt wird. Der abgetastete Wert der Rampenspannung wird von einer extern über ein Potentiometer eingegebenen Referenzspannung subtrahiert und auf den invertierenden Eingang eines Differenzverstärkers gegeben, dessen Ausgangsspannung zusammen mit der Rampenspannung einem weiteren Komparator zugeführt wird, der über einen nachgeschalteten Triggerpulsgenerator ein primäres Zündsignal erzeugt, wenn die Rampenspannung die Ausgangsspannung des Differenzverstärkers überschreitet. Durch diese Schaltung wird somit die Phasenverschiebung zwischen Motorstrom und Motorspannung und somit der Leistungsfaktor auf einen Wert stabilisiert, der durch die am Potentiometer eingestellte Referenzspannung gegeben ist.

Bei Drehstrommotoren, die ohne Nulleiter beispielsweise in Stern- oder Dreieckschaltung betrieben werden, muß bei einer Phasenanschnittsteuerung jedoch darauf geachtet werden, daß stets wenigstens zwei Phasen gleichzeitig leitend sind. Bei Zündwinkeln, die 60° überschreiten, ist es nur dann der Fall, wenn neben der die Zündung auslösende Phase noch eine zweite Phase gezündet wird. Diese zweite Phase wird dabei bestimmt durch den Drehsinn der Wechselspannung und die zündungsauslösende Phase.

Bei der bekannten Vorrichtung wird dies durch einen Logikschaltkreis aus sechs UND-Gattern realisiert, von denen jeweils zwei der Steuereinrichtung einer Phase zugeordnet sind. Mittels eines Drehrichtungsdetektors wird je nach Drehsinn der Wechselspannung ein binäres Signal auf eine von zwei Ausgangsleitungen des Drehrichtungsdetektors gelegt. Diese Ausgangsleitungen sind jeweils gemeinsam mit der Ausgangsleitung für das primäre Zündsignal der auslösenden Phase auf unterschiedliche UND-Gatter gelegt, deren Ausgänge jeweils das Gate eines der beiden anderen Triacs mit sekundären Zündsignalen versorgt.

Die Zeitlänge der an den Gates der Triacs oder Thyristoren anliegenden Zündsignale muß ausreichen, um eine sichere Zündung des betreffenden Stromkreises zu gewährleisten. Dies geschieht dadurch, daß ausgehend von Erfahrungswerten eine feste Zeitlänge vorgegeben wird, die groß genug ist, um für alle Betriebsbedingungen eine Zündung herbeizuführen. Eine zu lange Dauer des Zündsignales ist aber unerwünscht, um eine Überbelastung von vorgeschalteten Zündverstärkern, insbesondere Zündtransformatoren, zu vermeiden. Dies führt in der Praxis zu nicht immer zufriedenstellenden Kompromissen bei der Dimensionierung der Zeitlänge der Zündsignale.

Es ist ein Verfahren zur Steuerung eines impulsbreitenmodulierten Umrichters mit einer Antiparallelschaltung zweier steuerbarer Thyristoren und zweier Dioden bekannt. Zunächst wird bei diesem bekannten Verfahren durch Vergleich der Amplituden einer Sinusspannung mit einer Sägezahnspannung in einem Komparator ein impulsbreitenmoduliertes binäres Signal erzeugt. Durch die Flanken dieses impulsbreitenmodulierten Signals werden kurze Zündimpulse einer festen Zeitlänge und abwechselnder Polarität getriggert, die somit einen durch das impulsbreitenmodulierte Signal vorgegebenen variablen Abstand zueinander haben. In einem Strompolaritätsfühler wird außerdem ein binäres Polaritätssignal erzeugt, das anzeigt, ob der von einem Stromwandler kommende Wechselstrom positiv oder negativ ist. Die kurzen Zündimpulse werden nun mit dem Polaritätssignal derart logisch verknüpft, daß die Zündimpulse an der jeweiligen Steuerelektrode der Thyristoren nur in der entsprechenden positiven oder negativen Halbwelle des Stromes anliegen. Ferner wird in einem Strompegeldetektor aus dem Strom ein binäres Referenzsignal hergeleitet, dessen beide Zustände einer Stromstärke über bzw. unter dem Betrag des Haltestromes der Thyristoren entsprechen. Durch logische Verknüpfung mit diesem Referenzsignal werden in der entsprechenden Halbwelle des Stromes die Zündimpulse in dem Zeitbereich, in dem der Betrag des Stromes unterhalb des Betrages des Haltestromes liegt, so lange verlängert, bis die Stromstärke den Haltestrom erreicht hat und somit der entsprechend gezündete Thyristor eingeschaltet bleibt. Die übrigen kurzen Zündimpulse bleiben in der entsprechenden Halbwelle des Stromes an der entsprechenden Steuerelektrode anliegen (DE-A1-32 08 652).

Der Erfindung liegt nun die Aufgabe zugrunde, ein Verfahren zur Steuerung von ein- oder mehrphasigen Wechselstromstellern anzugeben, bei dem die zur Zündung der Halbleiter-Ventile verwendeten Zündsignale einerseits ausreichend lang sind, um eine sichere Zündung zu gewährleisten und andererseits hinreichend kurz dimensioniert werden können, um die Überbelastung der Zündverstärker zu vermeiden. Außerdem soll eine Vorrichtung zur Verfügung gestellt werden, die zur Durchführung dieses Verfahrens geeignet ist.

Ein bekanntes Verfahren zur Steuerung von Wechselstromstellern und eine bekannte Vorrichtung mit einem steuerbaren Thyristor zur Durchführung dieses Verfahrens lösen diese Aufgaben folgendermaßen. Aus den Spannungsnulldurchgängen der Netzspannung werden mit Hilfe einer Rampenspannung Zündsignale mit einer fest vorgegebenen Zeitlänge abgeleitet. Die Zeitlänge dieser Zündsignale ist somit unabhängig von der aktuellen Last und wird hinreichend groß gewählt, daß eine sichere Zündung des Thyristors gewährleistet ist. Die Erzeugung dieser Zündsignale wird nun so lange verhindert, daß in der Last kein Strom der vorangegangenen Halbwelle mehr fließt. Dazu wird aus der Phasendifferenz zwischen Strom und Spannung ein Phasendifferenzsignal abgeleitet und das Zündsignal wird mit diesem Phasendifferenzsignal durch eine logische AND-Schaltung verknüpft (US-PS 4 426 614).

Die genannten Aufgaben werden erfindungsgemäß jeweils mit den Merkmalen des Anspruchs 1 bzw 3 gelöst. Da für die Phasenanschnittsteuerung Zündsignale mit variabler Zeitlänge vorgesehen sind, die wenigstens annähernd mit dem Wiederanstieg des in der gezündeten Phase fließenden Stromes enden, ist sichergestellt, daß eine Zündung nicht über das notwendige Zeitmaß hinaus erfolgt.

Eine Vorrichtung zur Durchführung des Verfahrens enthält Mittel, die den Wiederanstieg des Stromes anzeigen und ein entsprechendes elektrisches Signal an eine Einrichtung weiterleiten, die dieses elektrische Signal dazu benutzt um entsprechend zeitlich begrenzte Zündsignale bereitzustellen.

Zur weiteren Erläuterung der Erfindung wird auf die Zeichnung verwiesen, in deren
- Figur 1: eine Vorrichtung zur Durchführung des Verfahrens gemäß der Erfindung in einem Blockschaltbild veranschaulicht ist. In
- Figuren 2 bis 4: sind die für den Zündvorgang verwendeten elektrischen Signale jeweils in einem Diagramm gegen die Zeit aufgetragen.
- Figur 5: zeigt eine weitere Vorrichtung zur Durchführung einer vorteilhaften Ausgestaltung des Verfahrens gemäß der Erfindung in einem Blockschaltbild, die anhand der in
- Figuren 6 bis 9: dargestellten Zeitabläufe der zu dieser Ausführungsform gehörenden elektrischen Signale näher erläutert wird.
- Figur 10: zeigt eine besonders vorteilhafte Vorrichtung zur Durchführung des erfindungsgemäßen Verfahrens in einem Drehstromkreis.

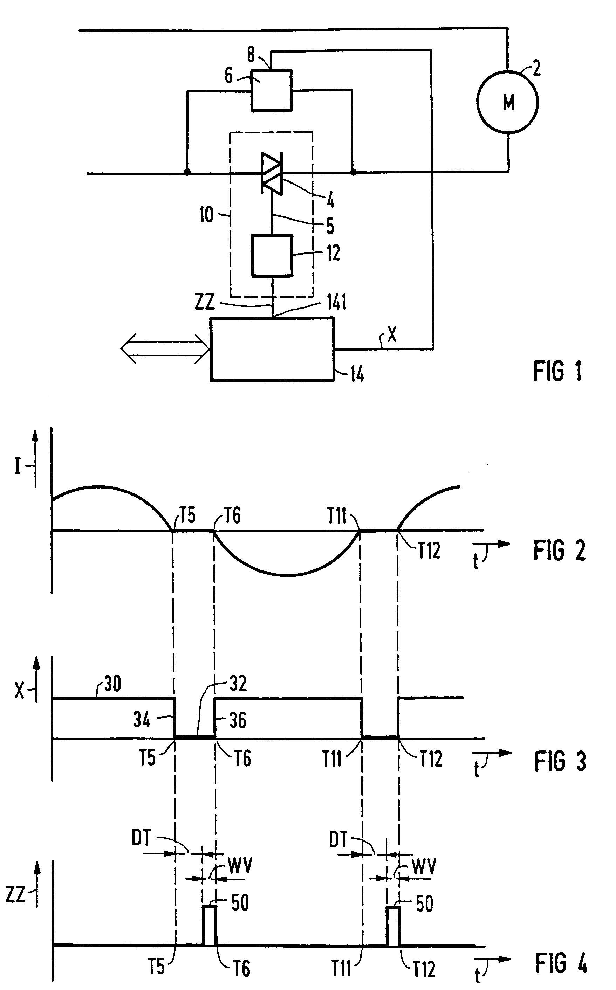

Entsprechend Figur 1 ist eine Last, beispielsweise ein Motor 2 über ein Halbleiter-Ventil 4, beispielsweise ein Triac oder eine Schaltung aus mehreren Halbleiter-Ventilen, beispielsweise eine Thyristorschaltung, an die Phase eines einphasigen Wechselstromnetzes angeschlossen. Das Halbleiter-Ventil 4 ist mit einer Steuerelektrode 5 versehen und Teil einer Zündeinrichtung 10, welche den für das Halbleiter-Ventil 4 erforderlichen Zündverstärker 12, beispielsweise Optotriacs oder Zündtransformatoren enthält. Anstelle eines elektrisch gezündeten Halbleiter-Ventils 4 kann auch ein optisch gezündetes HalbleiterVentil vorgesehen sein.

Die Steuerung des Halbleiter-Ventiles erfolgt durch Phasenanschnitt- oder Zündeinsatzsteuerung. An die Steuerelektrode 5 wird hierzu in Abhängigkeit von der Phasenlage ein Zündsignal angelegt, das eine Zündung des Halbleiter-Ventils 4 hervorruft.

Dem Halbleiter-Ventil 4 ist in der bevorzugten Ausführungsform gemäß der Figur ein Referenz-Detektor 6 zugeordnet, mit dem der Stromnulldurchgang des im Stromkreis fließenden Stromes I über den Spannungsabfall am Halbleiter-Ventil 4 erfaßt wird. Der Stromnulldurchgang dient zur Festlegung einer Zeitreferenz für die Phasenanschnittsteuerung. Ein entsprechendes Referenzsignal X wird am Ausgang 8 des Referenz-Detektors 6 bereitgestellt. Der Referenz-Detektor 6 enthält hierzu beispielsweise einen Komparator, der den Absolutwert des Spannungsabfalles über dem Halbleiter-Ventil 4 mit einem vorgegebenen Schwellwert vergleicht. Am Ausgang 8 steht somit ein Referenzsignal X mit zwei Pegeln an. Mit dem einen Pegel wird dabei ein Zustand erfaßt, der zu einem in der Phase fließenden Strom gehört, der kleiner ist als ein dem Schwellwert zugehöriger Grenzwert. Bei entsprechend niedriger Wahl dieses Schwellwertes, beispielsweise etwa 10 V, entspricht dann dieser Pegel im wesentlichen Strom Null und das Referenzsignal X gibt im wesentlichen die Schaltzustände des Halbleiter-Ventils 4 wieder. Die Flanken zwischen diesen beiden Schaltzuständen fallen dann wenigstens annähernd zeitlich mit dem Stromnulldurchgang des durch das HalbleiterVentil 4 fließenden Stromes I zusammen.

Der Ausgang 8 des Referenz-Detektors 6 ist mit einer Steuereinrichtung 14, beispielsweise einem Mikroprozessor, verbunden, die aus dem Referenzsignal X ein entsprechend einem vorgegebenen Zündwinkel zeitverzögertes Zündsignal ZZ ableitet und an einem Steuerausgang 141 bereitstellt. Der Zündwinkel wird von der Steuereinrichtung 14 im Rahmen eines beispielsweise extern anwahlbaren Steuerprogramms sowie extern eingebbarer Motorparameter bestimmt. Der Zündwinkel kann auch durch ein intern in der Steuereinrichtung 14 ablaufendes Programm zeitabhängig sein. So wird beispielsweise durch einen zeitabhängigen Zündwinkel, der sich ausgehend von einem vorgegebenen Anfangswert bis auf einen Minimalwert reduziert, ein Sanftstart des Motors 2 ermöglicht.

In Figur 2 ist der im Stromkreis fließende Strom gegen die Zeit aufgetragen. Beim Erreichen des Stromnulldurchgangs zu den Zeitpunkten T5 und T11 löscht das diesem Stromkreis zugeordnete Halbleiter-Ventil bis zum erneuten Wiederzünden zu den Zeitpunkten T6 und T12. Der Referenz-Detektor erzeugt ein Referenzsignal X, das entsprechend Figur 3 zwei Signalpegel 30 und 32 hat, die im wesentlichen zu dem leitenden bzw. nichtleitenden Zustand des Halbleiter-Ventils korrespondieren. Dieses Signalpegel 30 und 32 sind durch erste und zweite Flanken 34 bzw. 36 voneinander getrennt. Dabei ist durch die ersten, im Beispiel der Figur abfallenden Flanken 34 jeweils der Zeitpunkt T5 bzw. T11 des Erreichens des Stromnullpunktes und durch die zweiten, im Beispiel der Figur ansteigenden Flanken 36 jeweils der Zeitpunkt T6 bzw. T12 des Wiederzündens definiert.

In der Steuereinheit wird jeweils durch die abfallende Flanke 34 des Referenzsignales X ein Zähler in Gang gesetzt, dessen Zählerinhalte von der Steuereinrichtung ausgelesen werden. Die Steuereinrichtung erzeugt dann nach Erreichen eines vorgegebenen Zählerinhalts, entsprechend einer zugehörigen Zeitverschiebung DT, zu den Zeitpunkten T5 + DT und T12 + DT Zündsignale ZZ, die in der Figur 4 durch das Bezugszeichen 50 gekennzeichnet sind. Diese Zündsignale ZZ enden jeweils zu den Zeitpunkten T6 bzw. T12, die mit dem Wiederanstieg des Stroms wenigstens annähernd zeitlich zusammenfallen. Die Zündsignale ZZ haben somit eine variable Zeitlänge WV und dauern nur solange an, bis der Strom in der Phase tatsächlich wieder angestiegen ist. Die Zeitlänge dieser Zündsignale ZZ muß dabei ausreichend groß sein, um zu gewährleisten, daß der Haltestrom des Halbleiter-Ventils überschritten ist. Dies geschieht zweckmäßigerweise dadurch, daß der Schwellwert für den Referenzdetektor ausreichend hoch, beispielsweise auf etwa 10 V, gesetzt wird, so daß die Flanke 36 erst dann getriggert wird, wenn der Strom den erforderlichen Haltestrom überschreitet. Die Zeitpunkte T5, T6, T11 und T12 sind deshalb in Abweichung von der vereinfachenden Darstellung gemäß Figur 2 als Zeitpunkte zu verstehen, in denen der Strom einen vorgegebener Schwellwert in der Nähe von Strom Null unter- oder überschreitet.

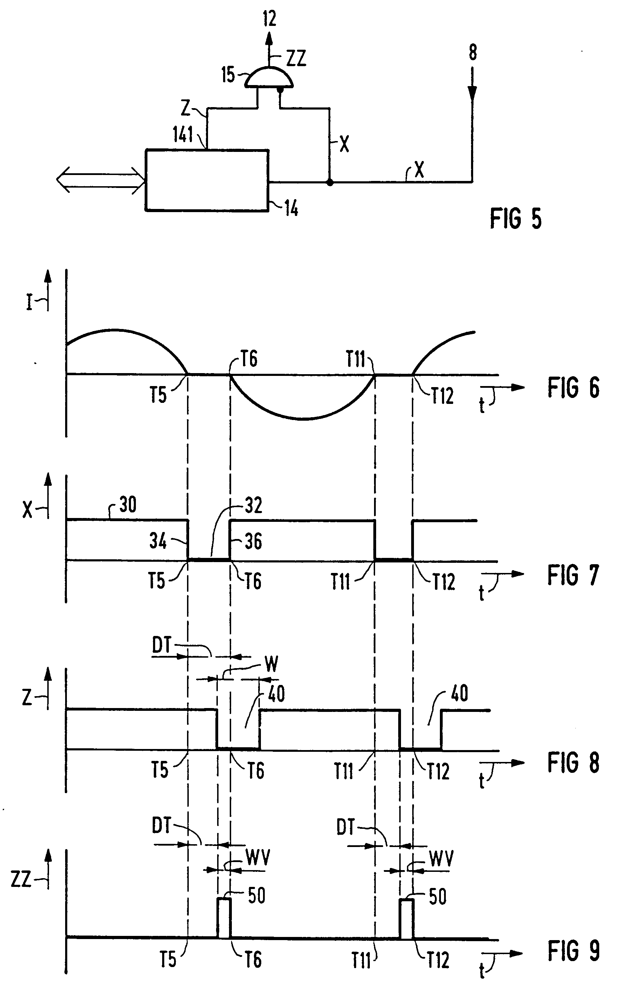

Die Begrenzung der Zeitdauer der an das Halbleiter-Ventil weitergeleiteten Zündsignale ZZ kann beispielsweise dadurch erzeugt werden, daß gemäß Figur 5 in der Steuereinrichtung 14 aus dem Referenzsignal X ein primäres Zündsignal Z abgeleitet wird, dessen Zeitlänge fest vorgegeben ist und das entsprechend einem vorgegebenen Zündwinkel verzögert ist. Dieses primäre Zündsignal wird dann beispielsweise an einem Steuerausgang 141 der Steuereinrichtung 14 zur Verfügung gestellt und gemeinsam mit dem Referenzsignal einem logischen Gatter 15 zugeführt, an dessen Ausgang ein zur Zündung verwendetes sekundäres Zündsignal ZZ ansteht.

Der zeitliche Ablauf der zugehörigen Signale ist den Figuren 6 bis 9 zu entnehmen. Entsprechend Figur 8 werden in der Steuereinrichtung primäre Zündsignale Z erzeugt, die in der Figur durch das Bezugszeichen 40 gekennzeichnet sind. Diese primären Zündsignale sind gegenüber den Zeitpunkten T5 und T11 um die Zeitverschiebung DT verzögert und haben eine fest vorgegebene zeitliche Breite W. Der Figur ist zu entnehmen, daß die primären Zündsignale Z auch dann noch anstehen, wenn das Halbleiter ventil bereits gezündet ist. Die in Figur 9 dargestellten sekundären Zündsignale ZZ ergeben sich im Ausführungsbeispiel durch eine logische (Z ∧ X̅)-Verknüpfung der primären Zündsignale Z gemäß Figur 8 mit den Referenzsignalen X gemäß Figur 7.

Das anhand der Figuren 6 bis 9 erläuterte Verfahren läßt sich auch zur Steuerung von Drehstromstellern verwenden, bei denen bei Zundwinkeln, die 60° überschreiten, wenigstens zwei Phasen gleichzeitig gezündet werden müssen. Dazu werden in Analogie zu dem vorstehend erläuterten Verfahren für jede Phase zeitverzögerte primäre Zündsignale mit fest vorgegebener Zeitlänge W abgeleitet, aus denen dann mit Hilfe eines Logikschaltkreises sekundäre Zündsignale abgeleitet werden, die jeweils zwei Phasen entsprechend dem Drehsinn des Wechselstroms gleichzeitig zünden. Durch eine logische Verknüpfung der primären Zündsignale mit den Referenzsignalen ist dann einerseits gewährleistet, daß die Zeitlänge der sekundären Zündsignale auf das erforderliche Maß begrenzt ist und daß außerdem bei kleinen Zündwinkeln, bei denen eine Doppelphasenzündung noch nicht erforderlich ist, die Zündung jeweils nur auf der Phase mit Strom Null erfolgt.

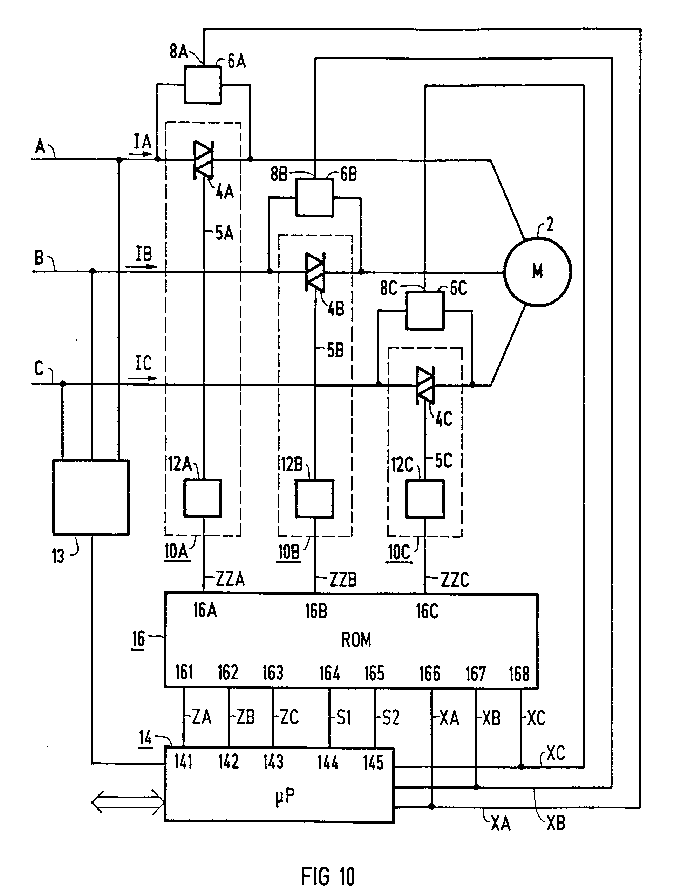

Gemäß Figur 10 ist bei einem mehrphasigen Wechselstromkreis der Motor 2 jeweils über ein Halbleiter-Ventil 4A, 4B bzw. 4C an die drei Phasen eines Drehstromnetzes angeschlossen. Die Halbleiter-Ventile 4A, 4B und 4C sind jeweils mit Steuerelektroden 5A, 5B bzw. 5C versehen und jeweils Teil einer Zündeinrichtung 10A, 10B bzw. 10C, die jeweils die für die Halbleiter-Ventile 4A, 4B und 4C erforderlichen Zündverstärker 12A, 12B bzw. 12C enthält. An die Steuerelektroden 5A, 5B bzw. 5C werden in Abhängigkeit von der Phasenlage sekundäre Zündsignale angelegt, die eine Zündung des betreffenden Halbleiter-Ventils 4A, 4B bzw. 4C hervorrufen. Den Halbleiter-Ventilen 4A, 4B bzw. 4C ist jeweils ein Referenz-Detektor 6A, 6B bzw. 6C zugeordnet, mit dem der Stromnulldurchgang des in den Phasen A, B und C jeweils fließende Stromes IA, IB bzw. IC über den Spannungsabfall an den Halbleiter-Ventilen 4A, 4B bzw. 4C erfaßt wird. An den Ausgängen 8A, 8B und 8C des Referenz-Detektors 6A, 6B bzw. 6C werden jeweils Referenzsignale XA, XB bzw. XC bereitgestellt, die in Analogie zu dem anhand von Figur 1 erläuterten Ausführungsbeispiel im wesentlichen die Schaltzustände der Halbleiter-Ventile 4A, 4B bzw. 4C wiedergeben. Die Flanken zwischen diesen beiden Schaltzuständen fallen dann zeitlich mit den Stromnulldurchgängen des durch die Halbleiter-Ventile 4A, 4B und 4C jeweils fließenden Stromes zusammen. Die Ausgänge 8A, 8B und 8C der Referenz-Detektoren 6A, 6B bzw. 6C sind mit einer Steuereinrichtung 14, beispielsweise einem Mikroprozessor verbunden, die aus den Referenzsignalen XA, XB und XC entsprechend einem vorgegebenen Zündwinkel zeitverzögerte primäre Zündsignale ZA, ZB und ZC ableitet und an einem jeweils einer Phase A, B bzw. C zugeordneten Steuerausgang 141, 142 bzw. 143 bereitstellt.

Zusätzlich werden von der Steuereinrichtung 14 auf weiteren Steuerausgängen 144 und 145 noch binäre Steuersignale S1 und S2 zur Verfügung gestellt, die entsprechend ihren Pegeln Betriebsarten der Steuerung sowie im Drehsinn des Drehstromes anzeigen. Für die Ermittlung dieses Drehsinns kann gemäß dem Beispiel der Figur ein Drehrichtungs-Detektor 13 vorgesehen sein, der ein entsprechend dem Drehsinn binäre kodiertes Ausgangssignal an die Steuereinrichtung 14 weiterleitet. Die Steuerausgänge 141 bis 145 sind an Steuereingänge 161 bis 165 eines Festwertspeichers 16, vorzugsweise ein programmierbarer Festwertspeicher (PROM), insbesondere ein EPROM oder ein EEPROM, angeschlossen. Der Festwertspeicher 16 verfügt außerdem über weitere Steuereingänge 166 bis 168, die jeweils mit einem Ausgang 8A, 8B bzw. 8C der Referenz-Detektoren 6A, 6B bzw. 6C verbunden sind. Die an den Steuereingängen 161 bis 165 anstehenden primären Zündsignale ZA, ZB und ZC sowie die Steuersignale S1 und S2 werden zusammen mit den an den Steuereingängen 166 bis 168 anstehenden Referenzsignalen XA, XB und XC entsprechend einer im Festwertspeicher 16 programmierten Tabelle verarbeitet. An den Datenausgängen 16A, 16B und 16C des Festwertspeichers 16 stehen die entsprechend dieser vorgegebenen Tabelle für die drei Phasen ermittelten sekundären Zündsignale ZZA, ZZB bzw. ZZC in Form eines binären Datenwortes an. Die Datenausgänge 16A, 16B und 16C sind jeweils mit einer Zündeinrichtung 10A, 10B bzw. 10C verbunden, in denen die sekundären Zündsignale ZZA, ZZB und ZZC verstärkt und galvanisch getrennt zum schaltbaren Halbleiter-Ventil 4A, 4B bzw. 4C weitergeleitet werden. Im Festwertspeicher 16 werden die primären Zündsignale ZA, ZB und ZC mit den Referenzsignale XA, XB und XC in der Weise logisch verknüpft, daß nur dann von Null verschiedene (active high) sekundäre Zündsignale ZZA, ZZB und ZZC erzeugt werden, wenn zugleich die Referenzsignale XA, XB bzw. XC durch ihren Zustand, beispielsweise 0 (activ low), anzeigen, daß in der betreffenden Phase kein Strom fließt. Durch diese im Festwertspeicher 16 realisierte logische Verknüpfung der primären Zündsignale ZA, ZB, ZC mit den Referenzsignalen XA, XB, XC wird bewirkt, daß die sekundären Zündimpulse ZZA, ZZB, ZZC zeitlich auf eine zum Zünden erforderliche Zeitdauer begrenzt werden. Durch diese Maßnahme ist auch gewährleistet, daß die im Festwertspeicher 16 programmierte Doppelphasenzündung erst dann wirksam wird, wenn der Zündwinkel einen Wert von 60° überschreitet, da erst unter dieser Bedingung die Situation auftreten kann, daß alle drei Phasen gleichzeitig nicht stromführend sind.

## Patentansprüche

1. Verfahren zur Steuerung von ein- oder mehrphasigen Wechselstromstellern durch Phasenanschnittsteuerung von Halbleiter-Ventilen (4) mit folgenden Merkmalen:
a) für die Phasenanschnittsteuerung sind sekundäre Zündsignale (ZZ) mit variabler Zeitlänge (WV) vorgesehen;
b) aus dem Spannungsabfall über dem entsprechenden Halbleiter-Ventil (4) wird ein Referenzsignal (X) mit zwei logischen Zuständen (30, 32) abgeleitet, wobei ein Zustand (32) einer Stromstärke in dem Halbleiter-Ventil (4) entspricht, die betragsmäßig kleiner ist als ein vorgegebener Schwellwert, und der andere Zustand (30) einer über diesem Schwellwert liegenden Stromstärke entspricht;
c) aus einer ersten Flanke (34) zwischen diesen beiden logischen Zuständen (30, 32), die einem Erreichen des Stromnullpunktes entspricht, wird ein um eine vorgegebene Zeitverschiebung (DT) zeitverzögertes primäres Zündsignal (Z) mit fest vorgegebener Zeitlänge (W) abgeleitet;
d) aus diesem primären Zündsignal (Z) wird ein sekundäres Zündsignal (ZZ) abgeleitet, dessen Zeitlänge (WV) jeweils durch die zweite Flanke (36) des Referenzsignals (X) begrenzt wird, so daß die sekundären Zündsignale (ZZ) wenigstens annähernd mit dem Wiederanstieg des in der gezündeten Phase fließenden Stromes enden.

2. Vorrichtung zur Durchführung des Verfahrens nach Anspruch 1 mit
a) einem Referenzdetektor (8) für das Referenzsignal (X),
b) einer mit dem Referenzdetektor (8) verbundenen Steuereinrichtung (14) zum Ableiten des primären Zündsignals (Z) und
c) einem mit der Steuereinrichtung (14) und dem Referenzdetektor (8) verbundenen logischen Gatter (15), an dessen Ausgang die sekundären Zündsignale (ZZ) anstehen.

3. Verfahren zur Steuerung von mehrphasigen Wechselstromstellern nach Anspruch 1 mit folgenden Merkmalen:
a) in jeder Phase (A, B, C) wird ein entsprechendes Referenzsignal (XA, XB, XC) abgeleitet;
b) für jede Phase (A, B, C) werden aus den entsprechenden Referenzsignalen (XA, XB, XC) die entsprechenden zeitverzögerten primären Zündsignale (ZA, ZB, ZC) mit fest vorgegebener Zeitlänge (W) abgeleitet,
c) aus diesen primären Zündsignalen (ZA, ZB, ZC) werden jeweils für zwei Phasen gleichzeitig getriggerte sekundäre Zündsignale (ZZA, ZZB, ZZC) nur dann abgeleitet, wenn in der betreffenden Phase ein Strom unterhalb des vorgegebenen Schwellwertes fließt.

4. Vorrichtung zur Durchführung des Verfahrens nach Anspruch 3 mit folgenden Merkmalen:
a) jeder Phase (A, B, C) sind ein Referenz-Detektor (6A, 6B, 6C) und eine Zündeinrichtung (10A, 10B, 10C) zugeordnet,
b) der Ausgang (8A, 8B, 8C) des Referenz-Detektors (6A, 6B, 6C) ist mit einer Steuereinrichtung (14) zur Erzeugung der primären Zündsignale (ZA, ZB, ZC) verbunden, die an voneinander getrennten und jeweils einer Phase (A, B, C) zugeordneten Steuerausgängen (141, 142, 143) anstehen,
c) dieser Steuereinrichtung (14) ist ein Festwertspeicher (16) zum Erzeugen der sekundären Zündsignale (ZZA, ZZB, ZZC) zugeordnet,
d) die Steuerausgänge (141, 142, 143) der Steuereinrichtung (14) und die Ausgänge (8A, 8B, 8C) der Referenz-Detektoren (6A, 6B, 6C) sind jeweils mit einem Steuereingang (161 bis 168) des Festwertspeichers (16) verbunden und
e) jeder Phase (A, B, C) ist ein Datenausgang (16A, 16B, 16C) zugeordnet, an dem die sekundären Zündsignale (ZZA, ZZB, ZZC) anstehen.

## Claims

1. Method for the control of single-phase or multiphase alternating-current controllers by means of generalized phase control of semiconductor valves (4) having the following features:
a) secondary trigger signals (ZZ) with variable time length (WV) are provided for the generalized phase control;
b) a reference signal (X) with two logical states (30, 32) is derived from the voltage drop across the appropriate semiconductor valve (4), whereby one state (32) corresponds with a current intensity in the semiconductor valve (4) which in terms of amount is smaller than a specified threshold value, and the other state (30) corresponds with a current intensity lying above this threshold value;
c) there is derived from a first transition (34) between these two logical states (30, 32), which corresponds with an attainment of the zero current point, a primary trigger signal (Z), time-delayed by a specified time displacement (DT), with firmly specified time duration (W);
d) from this primary trigger signal (Z) a secondary trigger signal (ZZ) is derived, the time duration (WV) of which is in each case limited by the second transition (36) of the reference signal (X), with the result that the secondary trigger signals (ZZ) end at least approximately with the re-increase of the current flowing in the triggered phase.

2. Device for carrying out the method according to claim 1 with
a) a reference detector (8) for the reference signal (X),
b) a control device (14) connected to the reference detector (8) for deriving the primary trigger signal (Z) and
c) a logic gate (15) connected to the control device (14) and the reference detector (8), at the output of which gate the secondary trigger signals (ZZ) are available.

3. Method for the control of multiphase alternating-current controllers according to claim 1, having the following features:
a) an appropriate reference signal (XA, XB, XC) is derived in each phase (A, B, C);
b) the appropriate time-delayed primary trigger signals (ZA, ZB, ZC) with firmly specified time duration (W) are derived for each phase (A, B, C) from the appropriate reference signals (XA, XB, XC),
c) from these primary trigger signals (ZA, ZB, ZC) in each case for two phases secondary trigger signals (ZZA, ZZB, ZZC) triggered at the same time are only derived if in the relevant phase a current below the specified threshold value flows.

4. Device for carrying out the method according to claim 3, having the following features:
a) there is associated with each phase (A, B, C) a reference detector (6A, 6B, 6C) and a trigger device (10A, 10B, 10C),
b) the output (8A, 8B, 8C) of the reference detector (6A, 6B, 6C) is connected to a control device (14) for the generation of the primary trigger signals (ZA, ZB, ZC), which are applied to control outputs (141, 142, 143) which are separated from one another and are in each case associated with a phase (A, B, C),
c) there is associated with this control device (14) a read-only memory (16) for the generation of the secondary trigger signals (ZZA, ZZB, ZZC),
d) the control outputs (141, 142, 143) of the control device (14) and the outputs (8A, 8B, 8C) of the reference detectors (6A, 6B, 6C) are connected in each case to a control input (161 to 168) of the read-only memory (16) and
e) there is associated with each phase (A, B, C) a data output (16A, 16B, 16C) to which the secondary trigger signals (ZZA, ZZB, ZZC) are applied.

## Revendications

1. Procédé pour commander des régulateurs de courant alternatif monophasés ou polyphasés au moyen d'une commande à découpage de phase exécutée par des valves à semiconducteurs (4), présentant les caractéristiques suivantes :
a) pour la commande à découpage de phase, il est prévu des signaux d'amorçage secondaires (ZZ) possédant une durée (WV) variable;
b) un signal de référence (X) possédant deux états logiques (30,32) est dérivé de la chute de tension par l'intermédiaire de la valve à semiconducteurs (4) correspondante, un état (32) correspondant à une intensité du courant dans la valve à semiconducteurs (4), dont la valeur est inférieure à une valeur de seuil prédéterminée, et l'autre état (30) correspondant à une intensité du courant supérieure à cette valeur de seuil;
c) un signal d'amorçage primaire (Z), qui est retardé d'un décalage temporel prédéterminé (DT) et qui possède une durée prédéterminée de façon fixe (W), est dérivé d'un premier flanc (34) apparaissant entre ces deux états logiques (30, 32) et qui correspond au moment où l'annulation du courant se produit;
d) à partir de ce signal d'amorçage primaire (Z) est dérivé un signal d'amorçage secondaire (ZZ), dont la durée (WV) est limitée respectivement par le second flanc (36) du signal de référence (X) de sorte que les signaux d'amorçage secondaires (ZZ) se terminent au moins approximativement lors de la montée suivante du courant circulant dans la phase amorcée.

2. Dispositif pour la mise en oeuvre du procédé suivant la revendication 1, comportant
a) un détecteur de référence (8) pour le signal de référence (X),
b) un dispositif de commande (14), qui est raccordé au détecteur de référence (8) et qui sert à dériver le signal d'amorçage primaire (Z), et
c) une porte logique (15), qui est raccordée au dispositif de commande (14) et au détecteur de référence (8), et à la sortie duquel apparaissent les signaux d'amorçage secondaires (ZZ).

3. Procédé pour la commande de régulateurs de courant alternatif polyphasés suivant la revendication 1, présentant les caractéristiques suivantes :
a) le signal de référence correspondante (XA,XB,XC) est dérivé dans chaque phase (A,B,C);
b) pour chaque phase (A,B,C), les signaux d'amorçage primaires retardés correspondants (ZA,ZB,ZC) possédant une durée prédéterminée de façon fixe (W) sont dérivés des signaux de référence correspondants (XA,XB,XC),
c) à partir de ces signaux primaires d'amorçage (ZA,ZB,ZC), des signaux d'amorçage secondaires (ZZA, ZZB, ZZC) qui sont déclenchés simultanément pour deux phases ne sont dérivés que lorsqu'un courant inférieur à la valeur de seuil prédéterminée circule dans la phase considérée.

4. Dispositif pour la mise en oeuvre du procédé suivant la revendication 3, présentant les caractéristiques suivantes :
a) à chaque phase (A,B,C) sont associés un détecteur de référence (6A,6B,6C) et un dispositif d'amorçage (10A, 10B, 10C),
b) la sortie (8A,8B,8C) du détecteur de référence (6A,6B,6C) est raccordée à un dispositif de commande (14) servant à produire des signaux d'amorçage primaires (ZA, ZB,ZC), qui sont présents sur des sorties de commande (141,142,143) séparées les unes des autres et associées respectivement à une phase (A,B,C),
c) à ce dispositif de commande (14) est associée une mémoire morte (16) servant à produire les signaux d'amorçage secondaires (ZZA,ZZB,ZZC),
d) les sorties de commande (141,142,143) du dispositif de commande (14) et les sorties (8A,8B,8C) des détecteurs de référence (6A,6B,6C) sont raccordées à des entrées respectives de commande (161 à 168) de la mémoire morte (16), et
e) à chaque phase (A,B,C) est associée une sortie de données (16A,16B,16C), sur laquelle apparaissent les signaux d'amorçage secondaires (ZZA,ZZB,ZZC).
